# EUROPEAN PATENT SPECIFICATION

(11) **EP 1 439 666 B1**
(45) Date of publication and mention of the grant of the patent: **11.07.2007**
(21) Application number: 03018318.0
(22) Date of filing: 12.08.2003
(51) Int. Cl.: H04L 12/28, H04N 7/24

(54) **Information processing apparatus and communication control method for use in the apparatus**
Einrichtung zur Informationsverarbeitung und Verfahren zur Kommunikationskontrolle verwendet in der Einrichtung
Dispositif de traitement d'informations et procédé de contrôle de communication utilisé dans le dispositif

(30) Priority: 16.01.2003 JP 2003008143
(43) Date of publication of application: 21.07.2004
(73) Proprietor: KABUSHIKI KAISHA TOSHIBA, Tokyo (JP)
(72) Inventor: Hirabayashi, Hirotada, 1-1 Shibaura 1-chome Minato-ku Tokyo 105 (JP); Nakamura, Seiichi, 1-1 Shibaura 1-chome Minato-ku Tokyo 105 (JP); Baba, Kunio, 1-1 Shibaura 1-chome Minato-ku Tokyo 105 (JP); Ogawa, Takehiro, 1-1 Shibaura 1-chome Minato-ku Tokyo 105 (JP)
(74) Representative: Henkel, Feiler & Hänzel

(56) References cited:
- EP-A- 1 199 844
- EP-A- 1 271 953
- US-A1- 2002 144 276

## Description

The present invention relates to an information processing apparatus for executing communication with a server, and to a communication control method used in the information processing apparatus.

In recent years, information processing technology and networking technology have advanced. Thanks to the technology advance, home network systems have been developed to achieve communication between electronic apparatuses, such as household TVs, audio apparatuses, and the like.

In the home network system, a home server can communicate with a client terminal, such as a personal computer, via a network. The client terminal can acquire and reproduce various content data stored in the home server on an as-needed basis.

Recently, a home server having a function of receiving TV broadcast programs has been developed. The home server transmits a received TV broadcast program to the client terminal at a certain transmission rate. Normally, the transmission rate is designated by the user of the client terminal. The higher the value of the transmission rate, the better the image quality of TV video displayed on the client terminal.

In the home network system, not only a wired communication network but also a wireless communication network has recently been used.

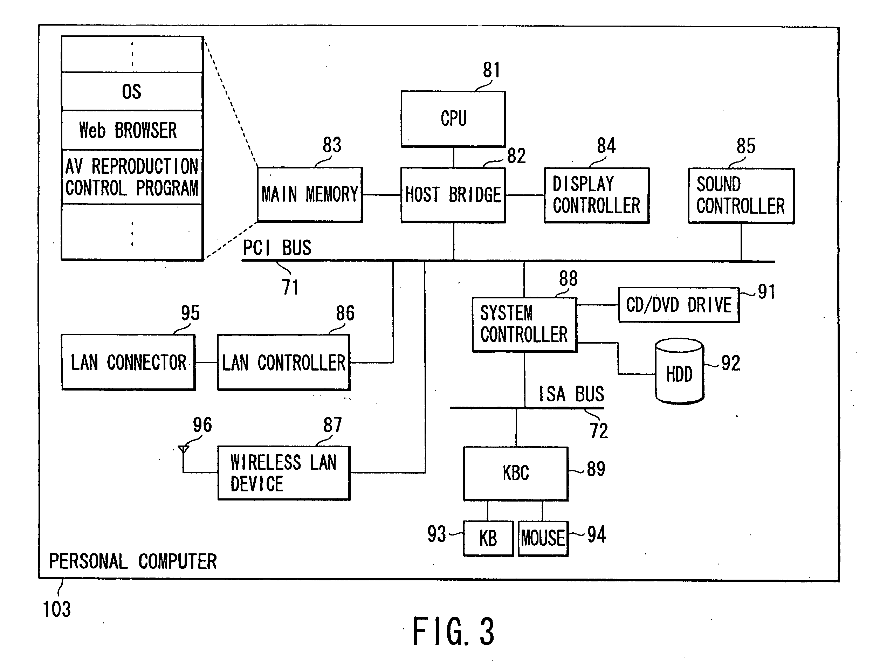

Jpn. Pat. Appln. KOKAI Publication No. 2002-111686 (page 5, FIG. 3), for instance, discloses a communication method wherein a network to be used for communication between a terminal and a base apparatus is selected from a wired communication network and a wireless communication network in accordance with the communication quality of each of the wired communication network and wireless communication network.

In normal cases, however, the communication speed of the wireless communication network is slower than that of the wired communication network. Thus, when the wireless communication network is used, broadcast program data may not be transmitted in real time from the home server to the client terminal, depending on the value of the transmission rate designated by the user. As a result, there is a fear that the client terminal cannot normally display the broadcast program data transmitted from the home server.

On the other hand, when the wired communication network is used, such a problem may arise that a low transmission rate is continuously used even when a higher transmission rate is available.

US 2002 0144276 discloses a system and methods for the delivery of streamed content over a network. The system and methods of this document are suited for the delivery of streaming video content over a network at a variety of data rates. The system allows a user to dynamically select the quality level of data to be delivered while a video is being displayed. Moreover, the system also can automatically select content suitable for a client device's connection speed as well as hardware, software, network and firewall configurations.

EP 1 199 844 discloses a communication system, method and apparatus which can maintain favourable communication quality without imposing much burden upon a user. A plurality of communication networks are formed between first and second communication apparatus. Upon starting communication between the first and second apparatus, communication quality of the communication networks is measured using at least one of the communication apparatus. One of the communication apparatus is selected for communication based on a result of the measurement. The first and second apparatus may be a base apparatus and a portable terminal apparatus, respectively, for use in the home, in which the base apparatus receives a television broadcast and transmits a selected television program of the broadcast to the terminal apparatus for display thereon. The communication networks may include a radio network and a wireline network. The terminal apparatus may also access the Internet via the base apparatus.

EP 1 271 953 discloses methods and apparatuses for use with a client and server device connected through a communication link. The client device sends a start-up request to the server device. The start-up request identifies a streamable media content that is to be provided to the client device, a communication link bandwidth associated with the communication link, and an amount of the desired streamable media content that is to be provided at a bit-rate greater than the encoded bit-rate but no greater than about the communication link bandwidth. The server device buffers at least the amount of the streamable media content, and transmits the amount of the buffered streamable media content at the higher bit-rate. The server device locates a discrete rendering point in the amount of the buffered streamable media content and initiates transmission beginning with the discrete rendering point. After transmitting the amount of the buffered streamable media content, the server device transmits subsequent portions of the streamable media content to the client device at a bit-rate about equal to the encoded bit-rate. The client device buffers received streamable media content, and subsequently renders the buffered streamed media content.

The object of the present invention is to provide an information processing apparatus and a communication control method capable of automatically optimizing the value of a transmission rate.

According to the present invention the above object is achieved by an information processing apparatus according to claim 1 and by a controlling method according to claim 5. The dependent claims are directed to further advantageous aspects of the invention.

The invention can be more fully understood from the following detailed description when taken in conjunction with the accompanying drawings, in which:
FIG. 1 shows the structure of a home network system according to an embodiment of the present invention;
FIG. 2 is a block diagram showing an example of the structure of a server provided in the home network system shown in FIG. 1;
FIG. 3 is a block diagram showing an example of the structure of an information processing apparatus provided in the home network system shown in FIG. 1;
FIG. 4 illustrates a content distribution process executed by the home network system shown in FIG. 1;
FIG. 5 shows an example of the relationship between the kinds of communication network used in the home network system shown in FIG. 1 and a transmission rate control of AV data;
FIG. 6 is a flow chart illustrating an example of the procedure of an AV reproduction process executed by the information processing apparatus provided in the home network system shown in FIG. 1;
FIG. 7 shows an example of a menu screen displayed on the information processing apparatus provided in the home network system shown in FIG. 1; and
FIG. 8 is a flow chart illustrating an example of the procedure of a down-conversion process executed by the server provided in the home network system shown in FIG. 1.

An embodiment of the present invention will now be described with reference to the accompanying drawings.

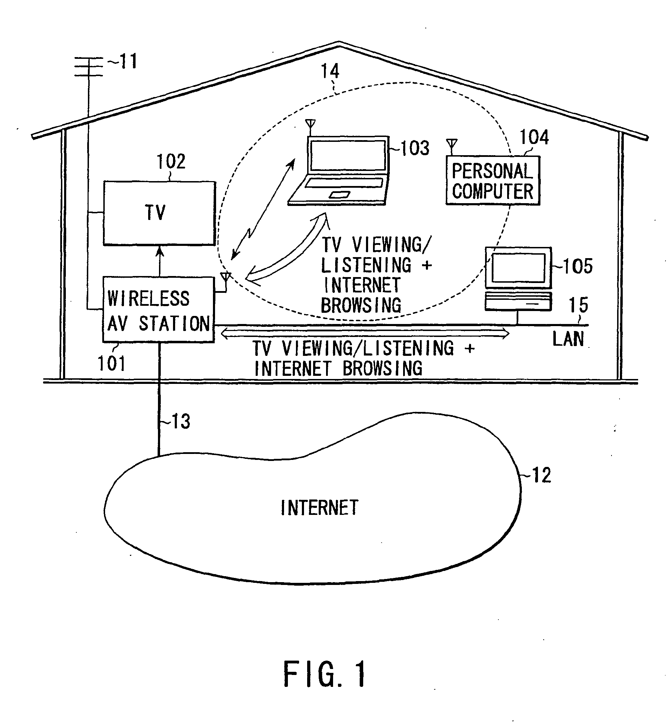

FIG. 1 shows the structure of a home network system using an information processing apparatus according to an embodiment of the present invention.

The home network system includes a wireless AV (Audio-Video) station 101, a TV receiver 102, notebook-type personal computers 103 and 104, and a desktop-type personal computer 105. Each of the personal computers 103, 104 and the desktop-type personal computer 105 constitute computing devices having a video display and audio outputs (at least one speaker).

The wireless AV station 101 is an apparatus functioning as a home network server. The wireless AV station 101 can transfer, via a wireless or wired network within the house, both broadcast content such as TV programs and Internet content such as Web pages to the personal computers 103 to 105.

The wireless AV station 101 is connected to a global network (external network) such as the Internet 12 via a communication line 13. The communications line 13 may be, for example, an ISDN (Integrated Services Digital Network), an ADSL (Asymmetric Digital Subscriber Line), or a CATV (Cable TV) line. Further, the wireless AV station 101 is connected to the respective personal computers 103 to 105 within the house via a wireless or wired network that constitutes a home network.

Each of the personal computers 103 to 105 is an information processing apparatus functioning as a client of the wireless AV station 101. Each of the notebook-type personal computers 103 and 104 includes a wireless communication device. Thereby, each of the notebook-type personal computers 103 and 104 can be connected to the wireless AV station 101 via a wireless communication network (wireless LAN) 14. In addition, each of the personal computers 103 and 104 can be connected to the wireless AV station 101 via a wired communication network (wired LAN) 15. The desktop-type personal computer 105 is connected to the wireless AV station 101 via the wired communication network (wired LAN) 15.

The wireless AV station 101 connects each of the personal computers 103 to 105 to the Internet 12. The wireless AV station 101 realizes data communication between a Web site on the Internet 12 and each of the personal computers 103 to 105.

An antenna cable connected to an outdoor TV broadcast receiving antenna 11 is led into the house. The TV receiver 102 and wireless AV station 101 are connected to the antenna cable. Broadcast program data sent from a broadcast station (including, for example satellite transmission and other wireless transmissions) can be received and reproduced by the TV receiver 102 and can also be received by the wireless AV station 101. The wireless AV station 101 transmits the received broadcast program data to the notebook-type personal computer 103, 104 via the wireless LAN 14 or the wired LAN 15. In addition, the wireless AV station 101 transmits the received broadcast program data to the desktop-type personal computer 105 via the wired LAN 15.

The wireless AV station 101 performs various functions, including a wireless router function, a TV function, a TV recording function, a content server function, and a remote-control function. These functions will be described below.

### Wireless router function

The wireless router function is a function for connecting each information processing apparatus, which is communicable with the wireless AV station 101 via the wireless LAN 14, to the Internet 12, thereby effecting data communication between a Web site on the Internet 12 and each information processing apparatus. The user can wirelessly browse the Internet from anywhere in the house, using the notebook-type personal computer 103 or 104.

### TV function

The TV function is a function for transmitting currently broadcast program data (TV program being broadcasting at present) received by the wireless AV station 101 to each information processing apparatus connected to the wireless AV station 101 via the wireless LAN 14 or wired LAN 15. The user can view and listen to the currently broadcast program data (live video) from anywhere in the house, using the notebook-type personal computer 103 or 104 having the wireless communication or the personal computer 105 via wired communication.

### TV recording function

The wireless AV station 101 includes a magnetic disk drive unit (hard disk drive (HDD)) as a large-capacity storage device for recording broadcast program data. The wireless AV station 101, for example, can record currently broadcast program data in the magnetic disk drive unit as a file, while transmitting the broadcast program data to the information processing apparatus 103-105. In addition, the wireless AV station 101 can receive other currently broadcast program data and record it in the magnetic disk drive unit, while transmitting the broadcast program data already stored in the magnetic disk drive unit to the information processing apparatus 103-105 and/or TV receiver 102. Furthermore, the wireless AV station 101 can output the broadcast program data stored in the magnetic disk drive unit to the TV receiver 102 and the information processing apparatus 103-105.

### Content server function

In response to a data acquisition request from the information processing apparatus, the wireless AV station 101 can transmit to the requesting information processing apparatus various content data, such as broadcast program data, recorded in the magnetic disk drive unit as files.

### Remote control function

The user can remote-control the TV function, TV recording function, and content server function of the wireless AV station 101 by operating any of the computers 103, 104 or 105. In addition, using a dedicated remote-control unit for operating the wireless AV station 101, the user can control the TV function, the TV recording function and the content server function of the wireless AV station 101. Furthermore, at a place outside the house, the user can connect his/her mobile phone or personal computer (via wired or wireless connection) to the wireless AV station 101 via the Internet 12, thereby remote-controlling the TV function and TV recording function of the wireless AV station 101 and the content server function.

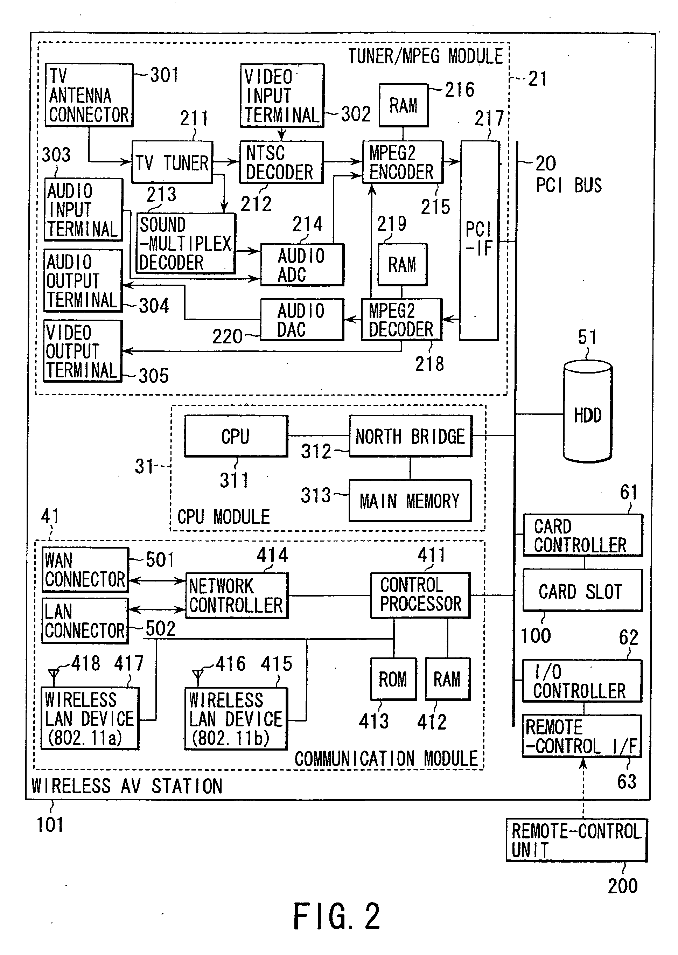

Next, referring to FIG. 2, the structure of the wireless AV station 101 will now be described.

In general terms, the wireless AV station 101 comprises three components, as shown in FIG. 2. That is, it comprises a tuner/MPEG module 21, a CPU module 31 and a communication module 41.

The tuner/MPEG module 21, CPU module 31 and communication module 41 are connected to a bus 20 such as a PCI bus. A magnetic disk drive unit (hard disk drive (HDD)) 51 is also connected to the bus 20.

The tuner/MPEG module 21 executes, for example, a broadcast program data receiving process, an encoding process for compression-encoding received broadcast program data, and a decoding process for decoding compression-encoded TV broadcast program data. The tuner/MPEG module 21 comprises, as shown in FIG. 2, a TV tuner 211, an NTSC (National TV Standards Committee) decoder 212, a sound-multiplex decoder 213, an audio A/D converter (audio ADC) 214, an MPEG2 encoder 215, a RAM 216, a PCI bus interface (PCI-IF) 217, an MPEG2 decoder 218, a RAM 219, and an audio D/A converter (audio DAC) 220.

The TV tuner 211 is connected to a TV antenna cable via a TV antenna connector 301. The TV tuner 211 is a device for receiving broadcast program data of a channel, listening/viewing of which is requested from the personal computer 103, 104, 105 or a remote-control unit 200. Based on the request for listening/viewing, the TV tuner 211 effects reception of TV broadcast signals and selection of the channel. TV broadcast program data of a certain channel, which is received by the TV tuner 211, is sent to the NTSC decoder 212. The TV tuner 211 separates the received TV broadcast program data into a video signal and an audio signal. Further, when necessary, the NTSC decoder 212 converts the separated video signals to digital data.

The NTSC decoder 212 is also connected to a video input terminal 302. The NTSC decoder 212 can therefore receive a video signal from an external video device such as a DVD (Digital Versatile Disc) player or a VCR (Video-Cassette Recorder). A sound-multiplex signal superimposed on the TV broadcast program data is decoded by the sound-multiplex decoder 213 and then converted to digital data by the audio A/D converter (audio ADC) 214. The audio A/D converter (audio ADC) 214 is also connected to an audio input terminal 303 and can receive an audio signal from an external video/audio device.

The MPEG2 encoder 215 receives the video data from the NTSC decoder 212 and the audio data from the audio A/D converter 214. The MPEG2 encoder 215 executes an encoding process for compression-encoding the input video data and audio data. The encoding process is executed according to the MPEG2 standard. The RAM 216 is used as a working memory for encoding processing by the MPEG2 encoder 215. The broadcast program data received by the TV tuner 211 is converted to an MPEG2 data stream by the MPEG2 encoder 215.

The PCI bus interface (PCI-IF) 217 is an interface for connection between the tuner/MPEG module 21 and the bus 20. The PCI bus interface (PCI-IF) 217 is used to enable the tuner/MPEG module 21 to communicate with the CPU module 31 and HDD 51 via the bus 20. The PCI bus interface (PCI-IF) 217 includes a group of registers accessible by the CPU module 31. The operations of the TV tuner 211 and MPEG2 encoder 215 are controlled according to commands set by the CPU module 31 in the group of registers in the PCI bus interface (PCI-IF) 217.

The MPEG2 decoder 218 decodes broadcast program data that is encoded in the MPEG2 format. For example, when encoded broadcast program data recorded in the HDD 51 is to be reproduced by the TV receiver 102, the encoded TV broadcast program data, which is read out of the HDD 51, is sent to the MPEG2 decoder 218 via the PCI bus interface 217. The MPEG2 decoder 218 decodes (decompresses) the TV broadcast program data. The RAM 219 is used as a working memory for decoding processing by the MPEG2 decoder 218. The operation of the MPEG2 decoder 218, too, is controlled by commands set by the CPU module 31 in the group of registers in the PCI bus interface 217.

Video data decoded by the MPEG2 decoder 218 is sent to the TV receiver 102 via the video output terminal 305. In addition, audio data decoded by the MPEG2 decoder 218 is converted, where necessary, to an analog signal by the audio D/A converter (audio DAC) 220, and then output to an external audio/video device via the audio output terminal 304.

In the present embodiment, it is possible that broadcast program data decoded by the MPEG2 decoder 218 is input once again to the MPEG2 encoder 215 and subjected to a re-encoding process. This technique is employed to perform a down-converting process for converting a transmission rate (bit rate) of encoded broadcast program data recorded in the HDD 51 to a specific transmission rate corresponding to, e.g. a communication band of the wireless LAN 14.

It should be noted that the transmission rate (bit rate) of encoded broadcast program data (MPEG2 stream) obtained by the MPEG2 encoder 215 varies depending on the image quality (low image quality, standard image quality or high image quality) of broadcast program data to be recorded in the HDD 51. If the high image quality is selected, an MPEG2 stream of broadcast program data, which has a very high transmission rate, is recorded in the HDD 51. In this case, there may be a case where the MPEG2 stream of this broadcast program data cannot be transmitted in real time with the communication band of the wireless LAN 14. In such a case, the aforementioned down-converting process is used.

The CPU module 31 controls the TV tuner 211, MPEG2 encoder 215 and MPEG2 decoder 218 of the tuner/MPEG module 21, and also controls data write to the HDD 51 and data read-out from the HDD 51. In addition, the CPU 31 receives commands relating to TV viewing/listening from the personal computers 103 to 105, using communication with the communication module 41, and transmits to the communication module 41 an MPEG2 stream of broadcast program data to be sent to the personal computers 103 to 105. The CPU module 31 comprises a CPU 311, a north bridge 312 for connecting a CPU bus of the CPU 311 and the PCI bus 20, and a main memory 313.

The communication module 41 is a communication control device that is operable as a wireless LAN router. The communication module 41 is configured to be wirelessly connectable to the personal computer 103, 104 via the wireless LAN 14. In addition, the communication module 41 is connected to the personal computer 105 via the wired LAN 15. In accordance with a request sent from each of the personal computers 103 to 105, the communication module 41 connects the personal computer, 103 to 105, to the Internet 12, and effects data transfer between the personal computer, 103 to 105, and the Internet 12. In this case, the communication module 41 executes the overall processing relating to data transfer between each of the personal computers 103 to 105 and the Internet 12. The CPU module 31 is not used for data transfer between each of the personal computers 103 to 105 and the Internet 12.

The communication module 41, as shown in FIG. 2, includes a control processor 411, a RAM 412, a ROM 413, a network controller 414, two wireless LAN devices 415 and 417, a WAN connector 501, and a LAN connector 502.

The WAN (Wide Area Network) connector 501 is a broadband terminal for data transmission/reception with the Internet 12. The WAN connector 501 is connected to a communication line 13 via, e.g. a modem. The LAN connector 502 is connected to the wired LAN 15 within the house.

The network controller 414 is a network control device for controlling data transfer with the Internet 12 via the WAN connector 501 and data transfer with the household wired LAN 15 via the LAN connector 502. The wireless LAN devices 415 and 417 are wireless communication devices that accomplish data transfer with the personal computer 103, 104 via the wireless LAN 14. Each of the wireless LAN devices 415 and 417 wirelessly communicates with the personal computer 103, 104 via an associated antenna 416, 418. The wireless LAN device 415 may be, for example, configured to execute wireless communication according to the IEEE 802.11b standard. The wireless LAN device 417 may be, for example, configured to execute wireless communication according to the IEEE 802.11a standard. With the provision of the two wireless LAN devices 415 and 417, the communication module 41 can communicate with either the personal computer 103 or personal computer 104, whether the wireless communication standard supported by the personal computer 103, 104 is IEEE 802.11b or IEEE 802.11a. The wireless LAN device used for wireless communication is seamlessly switched in accordance with the wireless communication standard supported by the client (personal computer 103, 104) wirelessly connected to the wireless AV station 101.

The control processor 411 controls the network controller 414 and wireless LAN devices 415 and 417 to control the transfer of data between the Internet 12 and each of the personal computers 103 and 104. To be more specific, the control processor 411 performs IP masquerade function, NAT (Network Address Translation) function, and DHCP (Dynamic Host Configuration Protocol), in order to cause the communication module 41 to operate as a wireless router. Further, the control processor 411 is connected to the PCI bus 20. The control processor 411 has functions for sending to the CPU 311 via the PCI bus 20 a request (command) relating to TV viewing/listening, which is received from the personal computer 103, 104 via the wireless LAN device 415, 417, and sending to the CPU 311 via the PCI bus 20 a request (command) relating to TV viewing/listening which is received from the personal computer 105 on the wired LAN 15 via the network controller 414.

The control processor 411 transmits a broadcast program data to the personal computer that has requested the broadcast program data, through the wireless LAN device 415, 417 or the network controller 414, when it receives the broadcast program data from the CPU 311 via PCI bus 20. The transmitting of the broadcast program data to the personal computer is performed in parallel with the data-transfer between the personal computer and the Internet 12.

For example, while the personal computer 103 that is wirelessly connectable to the communication module 41 is wirelessly browsing the Internet, broadcast program data requested by the personal computer 103 is wirelessly transmitted to the personal computer 103. In this case, the control processor 411 controls the wireless LAN device 415 or 417 so that Web content data received from a Web server on the Internet 12 and broadcast program data encoded by the tuner/MPEG module 21 may be wirelessly transmitted to the personal computer 103 in a time-division manner. Specifically, the control processor 411 performs a process for multiplexing the Web content data and encoded broadcast program data. The multiplexed Web content data and broadcast program data is wirelessly transmitted to the personal computer 103 in a time-division manner. In this way, the Web content data and broadcast program data is sent to the personal computer 103 as independent data. Thereby, the personal computer 103 can simultaneously display the Web content data and broadcast program data, using associated application programs. In addition, the positions and sizes of display windows of the Web content data and broadcast program data can freely be altered by the associated application programs.

The above-described functions of the control processor 411 are realized by firmware stored in the ROM 413.

Further, the wireless AV station 101 includes a card controller 61, an I/O controller 62 and a remote-control interface 63. The card controller 61 controls access to a memory card inserted in a card slot 100 provided in the wireless AV station 101. The card controller 61 is used to read still image data and audio data stored in the memory card and to record the data in the HDD 51.

The I/O controller 62 and remote-control interface 63 are used to receive a remote-control code sent from a remote-control unit 200 by an infrared signal, etc. The received remote-control code is sent to the CPU module 31 via the bus 20.

The HDD 51 is used to store various content data such as broadcast program data, still image data and audio data. The CPU 311 manages the content data recorded in the HDD 51 as a content database. The content database includes attribute information, such as a program title, a channel number, a song title, a genre and an artist name, etc., in association with each content data item recorded in the HDD 51. The CPU 311 provides the screen of the TV receiver 102 or the information processing apparatus 103-105 with the content of the content database as a content menu in response to a command sent from the information processing apparatus or remote-control unit 200. The user can select desired content data by referring to the content menu.

The structure of each information processing apparatus serving as a client will now be described with reference to FIG. 3. The notebook-type personal computer 103 is described by way of example as the information processing apparatus.

As is shown in FIG. 3, the personal computer 103 includes a PCI bus 71, an ISA bus 72, a CPU 81, a host bridge 82, a main memory 83, a display controller 84, a sound controller 85, a LAN controller 86, a wireless LAN device 87, a system controller 88, a keyboard controller (KBC) 89, a CD/DVD drive 91, an HDD 92, a keyboard (KB) 93, a mouse 94, and a LAN connector 95.

The CPU 81 is a processor for controlling the operation of the personal computer 103. The CPU 81 executes various programs loaded in the main memory 83, such as an operating system (OS), a Web browser and an AV reproduction control program. The AV reproduction control program is an application program for decoding and reproducing audio-video coded data (AV data) received over the wired or wireless networks. The AV reproduction control program includes a function of remote-controlling the wireless AV station 101, a function of decoding and reproducing AV data, such as encoded TV broadcast program data and music data, which is sent from the wireless AV station 101, and a function of downloading AV data such as encoded TV broadcast program data and music data from the wireless AV station 101 as a file. In addition, the AV reproduction control program has a function of decoding and reproducing AV data recorded on a recording medium of a CD/DVD that is read by the CD/DVD drive 91.

The display controller 84 is a device for controlling a display monitor of the personal computer 103. The sound controller 85 is used as a sound source for producing sound corresponding to audio data.

The LAN controller 86 is a communication device for executing communication with the wireless AV station 101 via the wired LAN 15. In the case where the LAN connector 95 is connected to the wired LAN 15, the CPU 81 executes communication with the wireless AV station 101 via the LAN controller 86.

The wireless LAN device 87 is a wireless communication device for transmitting/receiving data to/from the wireless AV station 101 via the wireless LAN 14. The wireless LAN device 87 executes wireless communication with the wireless AV station 101 via an antenna 96. The wireless LAN device 87 is configured, for example, to execute wireless communication according to the IEEE 802.11b or IEEE 802.11a standard.

The AV reproduction control program determines which one of the wireless LAN 14 and wired LAN 15 is to be used for communication with the wireless AV station 101. In accordance with the determined one of the wireless LAN 14 and wired LAN 15, the AV reproduction control program automatically controls the transmission rate of AV data to be transmitted from the wireless AV station 101 to the personal computer 103. Specifically, when the wireless LAN 14 is used for AV data transmission, the transmission rate of AV data is automatically set at a value corresponding to a communication band (transmission rate) of the wireless LAN 14. When the wired LAN 15 is used, the transmission rate of AV data is automatically set at a value corresponding to a communication band (transmission rate) of the wired LAN 15.

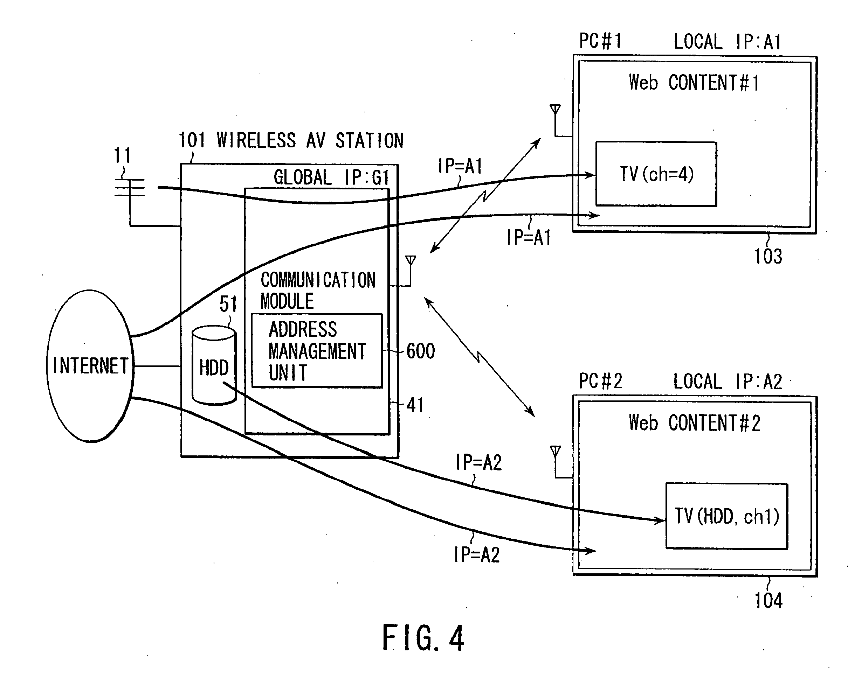

FIG. 4 illustrates a state in which Internet browsing and TV broadcast program viewing/listening are wirelessly performed on the two personal computers 103 and 104.

The personal computer 103 (PC#1) displays Web content #1, while enabling viewing/listening of currently broadcast TV program data (e.g. TV broadcast program data of channel number 4: ch = 4). On the other hand, the personal computer 104 (PC#2) displays Web content #2, while enabling viewing/listening of TV broadcast program data of another title already recorded in the HDD 51 (e.g. TV broadcast program data of channel number 1 recorded in HDD 51: HDD, ch = 1).

An address management unit 600 provided in the control processor 411 of communication module 41 manages local IP (Internet Protocol) addresses of the personal computers 103 and 104. TV broadcast program data requested by the personal computer 103 is sent to a local IP address (A1) of the personal computer 103. On the other hand, TV broadcast program data requested by the personal computer 104 is sent to a local IP address (A2) of the personal computer 104.

When the personal computers 103 and 104 access the Internet 12, the local IP addresses of the personal computers 103 and 104 are converted to a global IP address assigned to the communication module 41. Communication between a Web server on the Internet 12 and the communication module 41 is performed using the global IP address assigned to the communication module 41. In addition, communication between the communication module 41 and each of the personal computers 103 and 104 is performed using the local IP address of each of the personal computers 103 and 104.

Next, the transmission rate control function provided by the AV reproduction control program will now be described.

The transmission rate control function, as mentioned above, is a function for optimizing the transmission rate of AV data in accordance with the kind of the communication network used for AV data transmission (i.e. the kind of the communication device used for AV data transmission). In addition, the transmission rate control function includes a function for switching a protocol to be used for AV data transmission, on the basis of the kind of the communication network (communication device) used for AV data transmission and the transmission rate of recorded AV data.

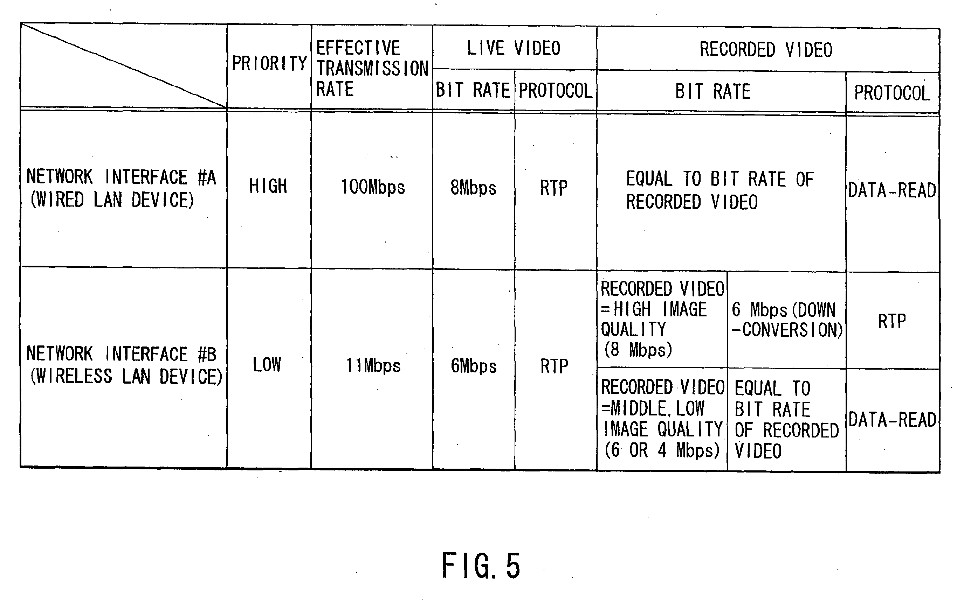

FIG. 5 shows the relationship between the kind of communication network and the transmission rate control used in the present embodiment.

The personal computer 103 selectively uses a network interface #A or a network interface #B, thereby performing communication with the wireless AV station 101. The network interface #A is a wired LAN. Communication via the wired LAN is executed using the LAN controller 86 (wired LAN device). The network interface #B is a wireless LAN. Communication via the wireless LAN is executed using the wireless LAN device 87.

In the description below, the LAN controller 86 supports the 100Base-TX standard, and the wireless LAN device 87 supports the IEEE 802.11b standard.

The effective transmission rate of the network interface #A (i.e. LAN controller 86) is 100 Mbps, and the effective transmission rate of the network interface #B (i.e. wireless LAN device 87) is 11 Mbps.

Priority levels are set for the network interfaces #A and #B. In this embodiment, in an environment in which both the network interfaces #A and #B are usable, the network interface #A with a higher transmission rate is selected. Thus, a high priority level is set for the network interface #A (i.e. LAN controller 86) and a low priority level is set for the network interface #B (i.e. wireless LAN device 87).

In either of the network interfaces #A and #B, transmission of currently broadcast program data (live video) is executed using the RTP (Real-time Transport Protocol). Transmission rates (bit rates) of broadcast program data to be sent from the wireless AV station 101 to the personal computer 103 are preset in association with the network interfaces #A and #B. Specifically, the value of the transmission rate corresponding to the network interface #A is 8 Mbps, and the value of the transmission rate corresponding to the network interface #B is 6 Mbps. When the personal computer 103 receives currently broadcast program data (live video) from the wireless AV station 101 by using the network interface #A (assuming here that personal computer 103 is connected to the wired LAN 15 via LAN controller 86), the AV reproduction control program within the main memory 83 of the personal computer 103 informs the wireless AV station 101 via the network interface #A of the transmission rate = 8 Mbps. On the other hand, when the personal computer 103 receives currently broadcast program data (live video) from the wireless AV station 101 by using the network interface #B (assuming here that the personal computer 103 is connected to wireless LAN 14 via the wireless LAN device 87), the AV reproduction control program informs the wireless AV station 101 via the network interface #B of the transmission rate = 6 Mbps.

The wireless AV station 101 encodes received broadcast program data, thereby generating an MPEG2 stream having the transmission rate corresponding to the rate previously designated by the personal computer 103 and transmitted to the wireless AV station 101. The wireless AV station 101 transmits the MPEG2 stream to the personal computer 103 according to the RTP protocol.

Two protocols, i.e. RTP and data-read protocol, are selectively used for transmission of broadcast program data (record video) already recorded in the HDD 51 of wireless AV station 101. In the data-read protocol, the personal computer 103 sends a data-read command to the wireless AV station 101. The data designated by the data-read command is read out of the HDD 51 of wireless AV station 101 and transmitted to the personal computer 103.

As mentioned above, the value of the transmission rate of broadcast program data recorded in the HDD 51 of wireless AV station 101 varies depending on the record image quality of the data (e.g. high image quality = 8 Mbps, standard image quality = 6 Mbps, low image quality = 4 Mbps). In the data-read protocol, the AV reproduction control program controls the data-read rate in accordance with the value of the transmission rate of the recorded broadcast program data, so that the broadcast program data may be transmitted to the personal computer 103 at a rate necessary for real-time reproduction of the recorded broadcast program data. The data-read rate is adaptively controlled in accordance with the residual data amount in a receiving buffer that is managed by the AV reproduction control program.

The AV reproduction control program uses the data-read protocol when broadcast program data (record video) already recorded in the HDD 51 is received from the wireless AV station 101 by using the network interface #A. A down-converting process is not executed.

On the other hand, the AV reproduction control program selectively uses the RTP or data-read protocol when broadcast program data (record video) already recorded in the HDD 51 is received from the wireless AV station 101 by using the network interface #B. In a case where broadcast program data recorded at 8 Mbps is already stored in the HDD 51, the AV reproduction control program informs the wireless AV station 101 of the transmission rate = 6 Mbps and requests that the wireless AV station 101 execute the down-converting process. Broadcast program data, which is down-converted to 6 Mbps by the wireless AV station 101, is transmitted to the personal computer 103 according to the RTP. In a case where broadcast program data recorded at 6 Mbps or 4 Mbps is stored on the HDD 51, the AV reproduction control program uses the data-read protocol.

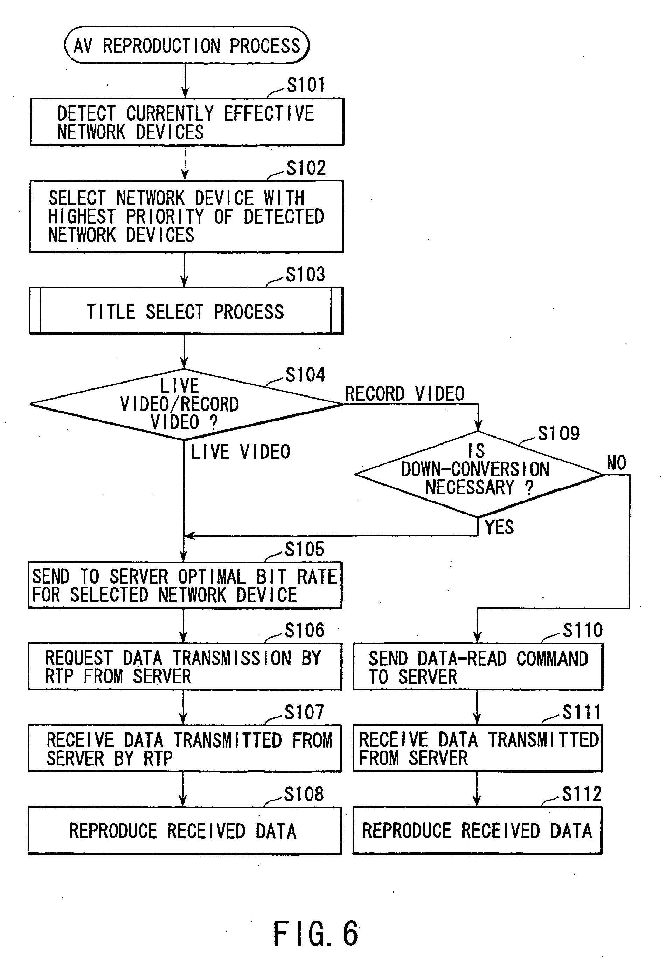

Referring now to a flow chart of FIG. 6, a description will be given of the procedure of the AV reproduction process executed by the AV reproduction control program.

For any given information processing apparatus, when the AV reproduction control program is activated, the AV reproduction control program first detects currently usable network devices (i.e. currently usable communication networks) for communication with the wireless AV station 101 (step S101). The valid/invalid state of each of the LAN controller 86 and wireless LAN device 87 is managed by the operating system. As regards the LAN controller 86, its valid/invalid state can also be switched dynamically by connection/disconnection of the wired LAN cable to/from the LAN connector 95. The AV reproduction control program inquires of the operating system about currently usable network devices, thus detecting whether the LAN controller 86 and wireless LAN device 87 are usable.

The AV reproduction control program selects a network device, which has the highest priority level of the detected currently usable network devices, as a network device to be used for communication with the wireless AV station 101 (step S102). If both the LAN controller 86 and wireless LAN device 87 are usable, the LAN controller 86 (wired LAN 15) having the higher priority level is selected. If only one of the LAN controller 86 and wireless LAN device 87 is usable, the usable network device is selected. In this manner, one of the two communication networks, i.e. the wired LAN 15 and wireless LAN 14, is determined as a communication network to be used for communication with the wireless AV station 101.

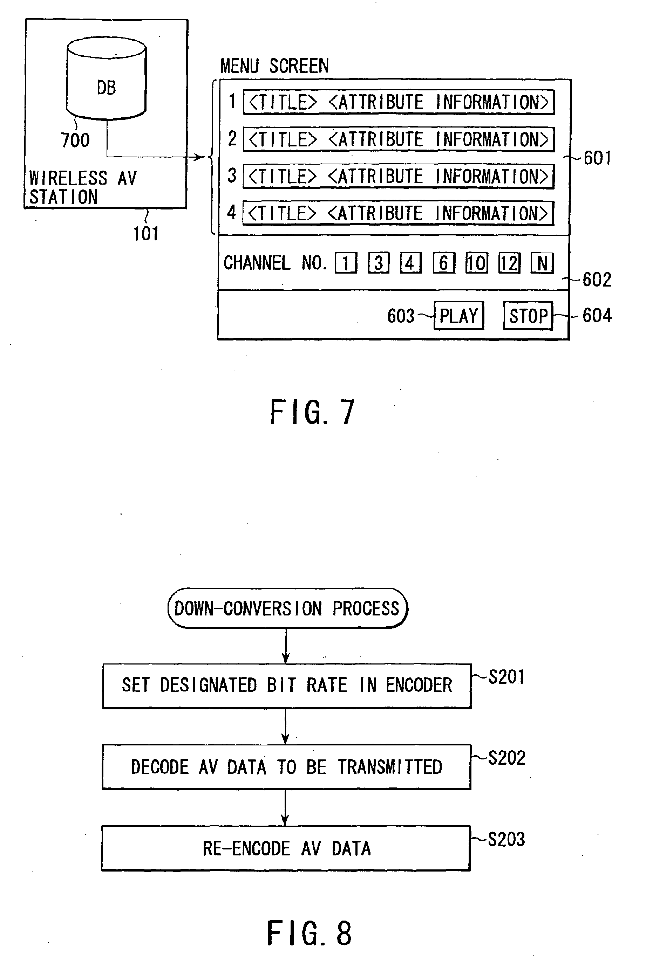

Next, the AV reproduction control program executes a title select process for selecting broadcast program data for viewing/listening (step S103). Again using computer 103 as an example, in step S103, the AV reproduction control program causes the display monitor of personal computer 103 to display a menu screen as shown in FIG. 7. The menu screen displays title list information 601 indicating a list of broadcast program data recorded in the HDD 51 of wireless AV station 101. The title list information 601 indicates a title and related attribute information (channel number, bit rate, genre, etc.) in association with each broadcast program data. The data on the list of broadcast program data recorded in the HDD 51 is managed by a database 700 in the wireless AV station 101. The AV reproduction control program displays the title list information 601 by acquiring data from the database 700 via the communication network corresponding to the selected network device.

The menu screen also displays a channel number list 602 for selecting a channel number of TV broadcast. The channel number list 602 is used at a time of requesting viewing/listening of currently broadcast program data (live video).

Further, the menu screen displays a play button 603 and a stop button 604.

The user may operate the keyboard or mouse to select the recorded broadcast program data to be viewed/listened or the channel number of TV broadcast to be viewed/listened, from the title list information 601 or channel number list 602. When the user depresses the play button 603 in the state in which the recorded broadcast program data or the channel number of TV broadcast to be viewed/listened is selected, the AV reproduction control program executes the following process.

To begin with, the AV reproduction control program determines whether the broadcast program data, viewing/listening of which is requested, is the currently broadcast program data (live video) or the broadcast program data (record video) already recorded in the HDD 51 (step S104).

If the requested broadcast program data is the live video, the AV reproduction control program informs the wireless AV station 101 of the value of the transmission rate corresponding to the network device selected in step S102 via the communication network corresponding to the selected network device (step S105). Then, the AV reproduction control program transmits a viewing/listening request, which indicates that the TV broadcast program corresponding to the channel number selected by the user is to be transmitted according to the RTP, to the wireless AV station 101 via the communication network corresponding to the selected network device (step S106 and see also FIG. 5). The wireless AV station 101 encodes the TV broadcast program corresponding to the channel number, viewing/listening of which is requested, at a transmission rate of which the AV reproduction control program has informed the wireless AV station 101. The wireless AV station 101 then transmits the encoded MPEG2 stream to the personal computer 103 in real time according to the RTP. The AV reproduction control program, while receiving the data from the wireless AV station 101, decodes and reproduces the received data (step S107, S108). Thereby, the display monitor of personal computer 103 displays video of broadcast program data (live video).

On the other hand, if the requested broadcast program data is the recorded video, the AV reproduction control program determines whether the down-converting process is necessary, on the basis of the kind of the network device selected in step S102 and the transmission rate (transmission rate of recorded broadcast program data) that is necessary for transmitting in real time the requested broadcast program data from the wireless AV station 101 to the personal computer 103 (step S109) as summarized in FIG. 5. Real time transmission of recorded data corresponds to the transmission of recorded data at a rate suitable for the receiving computer to process without causing quality degradation of the image at the receiving computer. Thus, if the receiving computer can process data only at a rate of 6 Mbps, the transmission rate should be down-converted from the 8 Mbps rate to the 6 Mbps.

If the down-converting process is necessary, the AV reproduction control program informs the wireless AV station 101 of the transmission rate corresponding to the network device selected in step S102 as a target transmission rate to be obtained by the down-conversion, via the communication network corresponding to the selected network device (step S105). Then, the AV reproduction control program transmits a viewing/listening request, which indicates that the recorded broadcast program data selected by the user is to be transmitted according to the RTP, to the wireless AV station 101 via the communication network corresponding to the selected network device (step S106). The wireless AV station 101 down-converts the recorded broadcast program data, the viewing/listening of which is requested. Then, the wireless AV station 101 transmits the MPEG2 stream obtained by the down-conversion to the personal computer 103 in real time according to the RTP. The AV reproduction control program, while receiving the data from the wireless AV station 101, decodes and reproduces the received data (step S107, S108). Thereby, the display monitor of personal computer 103 displays video of the recorded broadcast program data (record video).

If the down-converting process is not necessary, the AV reproduction control program transmits a data-read command to the wireless AV station 101 via the communication network corresponding to the selected network device (step S110). The AV reproduction control program, while receiving the data read out of the wireless AV station 101 according to the data-read command, decodes and reproduces the received data (step S111, S112). Thereby, the display monitor of personal computer 103 displays video of the recorded broadcast program data (record video).

Next, the procedure of the down-converting process executed by the wireless AV station 101 will be described with reference to a flow chart of FIG. 8.

To start with, the CPU 311 (FIG. 2) of wireless AV station 101 sets in the MPEG2 encoder 215 the value of the transmission rate, of which the personal computer 103 has informed the wireless AV station 101, as a target transmission rate to be obtained by the down-conversion (step S201). Then, the CPU 311 reads out of the HDD 51 the recorded broadcast program data designated by the viewing/listening request from the personal computer 103, and decodes the read-out data using the MPEG2 decoder 218 (step S202). Subsequently, the CPU 311 encodes the decoded broadcast program data using the MPEG2 encoder 215, thus generating compression-encoded broadcast program data (MPEG2 stream) having the code amount per frame or field designated by the target transmission rate (step S203).

As has been described above, according to the present embodiment, the transmission rate of data to be transmitted from the wireless AV station 101 to the personal computer 103 is automatically controlled in accordance with the kind of the communication network used for communication with the wireless AV station 101. Thereby, AV data is transmitted from the wireless AV station 101 to the personal computer 103 at an optimal transmission rate for the communication network used (wired LAN or wireless LAN). The user can view a TV broadcast program with an optimal image quality for the communication network used for communication with the wireless AV station 101, without performing at all an operation such as setting of the transmission rate.

## Claims

1. An information processing apparatus for performing communication with a server (101) by selectively using one of first and second communication networks (14, 15), comprising:
means for determining which one of the first and second communication networks (14, 15) is to be used for communication with the server (101); and
means for controlling a transmission rate of broadcast program data to be transmitted from the server (101) to the information processing apparatus in accordance with the one of the first and second communication networks (14, 15) determined by the communication network determining means;
**characterized in that**
the controlling means comprises:
means for determining whether the broadcast program data is live video data which is currently broadcasted or recorded video data which is already recorded in a storage device provided in the server (101);
means for informing the server (101) of a transmission rate corresponding to the one of the first and second communication networks (14, 15) determined by the communication network determining means as a transmission rate of a stream to be obtained by an encoding process for encoding the live video data, if the broadcast program data is the live video data;
means for determining whether a down-converting process is necessary, based on the kind of the one of the first and second communication networks (14, 15) determined by the communication network determining means and a transmission rate of the recorded video data, if the broadcast program data is the recorded video data; and
means for informing the server (101) of the transmission rate corresponding to the one of the first and second communication networks (14, 15) determined by the communication network determining means as a target transmission rate to be obtained by the down-converting process, if the down-converting process is necessary.

2. The information processing apparatus according to claim 1, **characterized in that** the first communication network (14) is a wireless communication network, and the second communication network (15) is a wired communication network.

3. The information processing apparatus according to claim 1, **characterized in that** the communication network determining means includes means for selecting a currently usable communication network from the first and second communication networks (14, 15) as a communication network to be used for communication with the server (101).

4. The information processing apparatus according to claim 1, **characterized in that** the communication network determining means includes:
means for determining whether the first and second communication networks (14, 15) are currently usable communication networks; and
means for, when both the first and second communication networks (14t 15) are currently usable communication networks, selecting one of the first and second communication networks (14, 15) as a communication network to be used for communication with the server (101), in accordance with a transmission rate of each of the first and second communication networks (14, 15).

5. A method of controlling a communication operation for an information processing apparatus capable of selectively using one of first and second communication networks (14, 15), comprising the steps of:
determining which one of the first and second communication networks (14, 15) is to be used for communication with a server (101); and
controlling a transmission rate of broadcast program data to be transmitted from the server (101) to the information processing apparatus in accordance with the determined one of the first and second communication networks (14, 15);
**characterized in that**:
the step of controlling comprises:
determining whether the broadcast program data is live video data which is currently broadcasted or recorded video data which is already recorded in a storage device provided in the server (101);
informing the server (101) of a transmission rate corresponding to the determined one of the first and second communication networks (14, 15) as a transmission rate of a stream to be obtained by an encoding process for encoding the live video data, if the broadcast program data is the live video data;
determining whether a down-converting process is necessary, based on the kind of the determined one of the first and second communication networks (14, 15) and a transmission rate of the recorded video data, if the broadcast program data is the recorded video data; and
informing the server (101) of the transmission rate corresponding to the determined one of the first and second communication networks (14, 15) as a target transmission rate to be obtained by the down-converting process, if the down-converting process is necessary.

6. The method according to claim 5, **characterized in that** the first communication network (14) is a wireless communication network, and the second communication network (15) is a wired communication network.

7. The method according to claim 5, **characterized in that** the step of determining includes selecting a currently usable communication network from the first and second communication networks (14, 15) as a communication network to be used for communication with the server (101).

8. The method according to claim 5 **characterized in that** the step of determining includes:
determining whether the first and second communication networks (14, 15) are currently usable communication networks, and
selecting one of the first and second communication networks (14, 15) as a communication network to be used for communication with the server (101) in accordance with a transmission rate of each of the first and second communication networks (14, 15), when both the first and second communication networks (14, 15) are currently usable communication networks.

## Patentansprüche

1. Informationsverarbeitungsvorrichtung zum Durchführen einer Kommunikation mit einem Server (101) durch selektives Verwenden eines ersten oder zweiten Kommunikationsnetzwerke (14, 15), mit:
einem Mittel zum Bestimmen, welches der ersten und zweiten Kommunikationsnetzwerks (14, 15) zur Kommunikation mit dem Server (101) zu verwenden ist, und
einem Mittel zum Steuern einer Übertragungsrate von Rundfunkprogrammdaten, die von dem Server (101) zu der Informationsverarbeitungsvorrichtung zu übertragen sind, in Übereinstimmung mit demjenigen der ersten und zweiten Kommunikationsnetzwerke (14, 15), das durch das Kommunikationsnetzwerks-Bestimmungsmittel bestimmt wurde;
**dadurch gekennzeichnet, dass**
das Steuermittel umfasst:
ein Mittel zum Bestimmen, ob die Rundfunkprogrammdaten Live-Videodaten sind, die aktuell gesendet werden, oder aufgezeichnete Videodaten sind, die bereits in einer in dem Server (101) bereitgestellten Speichervorrichtung aufgezeichnet sind;
ein Mittel zum Informieren des Servers (101) über eine Übertragungsrate, die derjenigen der ersten und zweiten Kommunikationsnetzwerks (14, 15) entspricht, das durch das Kommunikationsnetzwerk-Bestimmungsmittel bestimmt wurde, als eine Übertragungsrate eines Stroms, der durch einen Codierprozess zum Codieren der Live-Videodaten zu erhalten ist, wenn die Rundfunkprogrammdaten die Live-Videodaten sind;
ein Mittel zum Bestimmen, ob ein Abwärts-Umwandlungsprozess notwendig ist, basierend auf der Art desjenigen der ersten und zweiten Kommunikationsnetzwerks (14, 15), das durch das Kommunikationsnetzwerks-Bestimmungsmittel bestimmt wurde, und einer Übertragungsrate der aufgezeichneten Videodaten, wenn die Rundfunkprogrammdaten die aufgezeichneten Videodaten sind; und
ein Mittel zum Informieren des Servers (101) über die Übertragungsrate, die derjenigen des ersten und zweiten Kommunikationsnetzwerks (14, 15) entspricht, das durch das Kommunikationsnetzwerk-Bestimmungsmittel bestimmt wurde, als eine Zielübertragungsrate, die durch den Abwärts-Umwandlungsprozess zu erhalten ist, wenn der Abwärts-Umwandlungsprozess notwendig ist.

2. Informationsverarbeitungsvorrichtung gemäß Anspruch 1, **dadurch gekennzeichnet, dass** das erste Kommunikationsnetzwerk (14) ein drahtloses Kommunikationsnetzwerk und das zweite Kommunikationsnetzwerk (15) ein verdrahtetes Kommunikationsnetzwerk ist.

3. Informationsverarbeitungsvorrichtung gemäß Anspruch 1, **dadurch gekennzeichnet, dass** das Kommunikationsnetzwerk-Bestimmungsmittel ein Mittel umfasst, um ein aktuell benutzbares Kommunikationsnetzwerk von dem ersten oder zweiten Kommunikationswerk (14, 15) als Kommunikationsnetzwerk auszuwählen, das zur Kommunikation mit dem Server (101) zu verwenden ist.

4. Informationsverarbeitungsvorrichtung gemäß Anspruch 1, **dadurch gekennzeichnet, dass** das Kommunikationsnetzwerk-Bestimmungsmittel umfasst:
ein Mittel zum Bestimmen, ob die ersten und zweiten Kommunikationsnetzwerke (14, 15) aktuell benutzbare Kommunikationsnetzwerke sind; und
ein Mittel zum Auswählen, wenn sowohl die ersten als auch die zweiten Kommunikationsnetzwerke (14, 15) aktuell benutzbare Kommunikationsnetzwerke sind, eines des ersten und zweiten Kommunikationsnetzwerke (14, 15) als ein Kommunikationsnetzwerk, das zur Kommunikation mit dem Server (101) zu verwenden ist, in Übereinstimmung mit der Übertragungsrate des jeweils ersten oder zweiten Kommunikationsnetzwerks (14, 15).

5. Verfahren zum Steuern eines Kommunikationsbetriebs für eine Informationsverarbeitungsvorrichtung, die imstande ist, selektiv ein erstes oder zweites Kommunikationsnetzwerk (14, 15) zu verwenden, mit folgenden Schritten:
Bestimmen, welches der ersten und zweiten Kommunikationsnetzwerke (14, 15) zur Kommunikation mit einem Server (101) zu verwenden ist; und
Steuern einer Übertragungsrate von Rundfunkprogrammdaten, die von dem Server (101) zu der Informationsverarbeitungsvorrichtung zu übertragen sind, in Übereinstimmung mit dem Bestimmten ersten oder zweiten Kommunikationsnetzwerk (14, 15);
**dadurch gekennzeichnet, dass**:
der Schritt des Steuerns umfasst:
Bestimmen, ob die Rundfunkprogrammdaten Live-Videodaten sind, die aktuell rundgesendet werden, oder aufgezeichnete Videodaten sind, die bereits in einer in dem Server (101) bereitgestellten Speichervorrichtung aufgezeichnet sind;
Informieren des Servers (101) über eine Übertragungsrate, die dem Bestimmten ersten oder zweiten Kommunikationsnetzwerk (14, 15) entspricht, als eine Übertragungsrate eines Stroms, der durch einen Codierprozess zum Codieren der Live-Videodaten zu erhalten ist, wenn die Rundfunkprogrammdaten die Live-Videodaten sind;
Bestimmen, ob ein Abwärts-Umwandlungsprozess notwendig ist, basierend auf der Art des Bestimmten ersten oder zweiten Kommunikationsnetzwerks (14, 15) und einer Übertragungsrate der aufgezeichneten Videodaten, wenn die Rundfunkprogrammdaten die aufgezeichneten Videodaten sind; und
Informieren des Servers (101) über die Übertragungsrate, die dem Bestimmten ersten oder zweiten Kommunikationsnetzwerk (14, 15) entspricht, als eine Zielübertragungsrate, die durch den Abwärts-Umwandlungsprozess zu erhalten ist, wenn der Abwärts-Umwandlungsprozess notwendig ist.

6. Verfahren gemäß Anspruch 5, **dadurch gekennzeichnet, dass** das erste Kommunikationsnetzwerk (14) ein drahtloses Kommunikationsnetzwerk und das zweite Kommunikationsnetzwerk (15) ein verdrahtetes Kommunikationsnetzwerk ist.

7. Verfahren gemäß Anspruch 5, **dadurch gekennzeichnet, dass** der Schritt des Bestimmens ein Auswählen eines aktuell nutzbaren Kommunikationsnetzwerks der ersten oder zweiten Kommunikationsnetzwerke (14, 15) als ein Kommunikationsnetzwerk umfasst, das zur Kommunikation mit dem Server (101) zu verwenden ist.

8. Verfahren gemäß Anspruch 5, **dadurch gekennzeichnet, dass** der Schritt des Bestimmens umfasst:
Bestimmen, ob die ersten und zweiten Kommunikationsnetzwerke (14, 15) aktuell nutzbare Kommunikationsnetzwerke sind, und
Auswählen des ersten oder zweiten Kommunikationsnetzwerks (14, 15) als ein Kommunikationsnetzwerk, das zur Kommunikation mit dem Server (101) zu verwenden ist, in Übereinstimmung mit einer Übertragungsrate jeweils des ersten oder zweiten Kommunikationsnetzwerks (14, 15), wenn sowohl das erste als auch das zweite Kommunikationsnetzwerk (14, 15) aktuell nutzbare Kommunikationsnetzwerke sind.

## Revendications

1. Appareil de traitement d'informations destiné à effectuer une communication avec un serveur (101) en utilisant sélectivement un réseau parmi des premier et deuxième réseaux de communication (14, 15), comprenant :
un moyen pour déterminer lequel des premier et deuxième réseaux de communication (14, 15) doit être utilisé pour la communication avec le serveur (101) ; et
un moyen pour commander un taux de transmission de données de programme d'émission à transmettre depuis le serveur (101) vers l'appareil de traitement d'informations conformément au réseau parmi les premier et deuxième réseaux de communication (14, 15) déterminé par le moyen de détermination de réseau de communication ;
**caractérisé en ce que**
le moyen de commande comprend :
un moyen pour déterminer si les données de programme d'émission sont des données vidéo en direct qui sont actuellement émises ou des données vidéo enregistrées qui sont déjà enregistrées dans un dispositif de stockage prévu dans le serveur (101) ;
un moyen pour informer le serveur (101) d'un taux de transmission correspondant au réseau parmi les premier et deuxième réseaux de communication (14, 15) déterminé par le moyen de détermination de réseau de communication en tant que taux de transmission d'un flux à obtenir par un processus de codage pour coder les données vidéo en direct, si les données de programme d'émission sont les données vidéo en direct ;
un moyen pour déterminer si un processus de conversion à la baisse est nécessaire, sur la base du type du réseau parmi les premier et deuxième réseaux de communication (14, 15) déterminé par le moyen de détermination de réseau de communication et d'un taux de transmission des données vidéo enregistrées, si les données de programme d'émission sont les données vidéo enregistrées ; et
un moyen pour informer le serveur (101) du taux de transmission correspondant au réseau parmi les premier et deuxième réseaux de communication (14, 15) déterminé par le moyen de détermination de réseau de communication en tant que taux de transmission cible à obtenir par le processus de conversion à la baisse, si le processus de conversion à la baisse est nécessaire.

2. Appareil de traitement d'informations selon la revendication 1, **caractérisé en ce que** le premier réseau de communication (14) est un réseau de communication sans fil, et le deuxième réseau de communication (15) est un réseau de communication câblé.

3. Appareil de traitement d'informations selon la revendication 1, **caractérisé en ce que** le moyen de détermination de réseau de communication comprend un moyen pour sélectionner un réseau de communication actuellement utilisable parmi les premier et deuxième réseaux de communication (14, 15) en tant que réseau de communication à utiliser pour la communication avec le serveur (101).

4. Appareil de traitement d'informations selon la revendication 1, **caractérisé en ce que** le moyen de détermination de réseau de communication comprend :
un moyen pour déterminer si les premier et deuxième réseaux de communication (14, 15) sont des réseaux de communication actuellement utilisables ; et
un moyen pour, lorsque les premier et deuxième réseaux de communication (14, 15) sont tous les deux des réseaux de communication actuellement utilisables, sélectionner l'un des premier et deuxième réseaux de communication (14, 15) en tant que réseau de communication à utiliser pour la communication avec le serveur (101), conformément à un taux de transmission de chacun des premier et deuxième réseaux de communication (14, 15).

5. Procédé de commande d'un appareil de communication pour un appareil de traitement d'informations capable d'utiliser sélectivement l'un des premier et deuxième réseaux de communication (14, 15), comprenant les étapes consistant à :
déterminer lequel des premier et deuxième réseaux de communication (14, 15) doit être utilisé pour la communication avec un serveur (101) ; et
commander un taux de transmission de données de programme d'émission à transmettre depuis le serveur (101) vers l'appareil de traitement d'informations conformément au réseau déterminé parmi les premier et deuxième réseaux de communication (14, 15) ;
**caractérisé en ce que** :
l'étape de commande comprend :
le fait de déterminer si les données de programme d'émission sont des données vidéo en direct qui sont actuellement émises ou des données vidéo enregistrées qui sont déjà enregistrées dans un dispositif de stockage prévu dans le serveur (101) ;
le fait d'informer le serveur (101) d'un taux de transmission correspondant au réseau déterminé parmi les premier et deuxième réseaux de communication (14, 15) en tant que taux de transmission d'un flux à obtenir par un processus de codage pour coder les données vidéo en direct, si les données de programme d'émission sont les données vidéo en direct ;
le fait de déterminer si un processus de conversion à la baisse est nécessaire, sur la base du type du réseau déterminé parmi les premier et deuxième réseaux de communication (14, 15) et d'un taux de transmission des données vidéo enregistrées, si les données de programme d'émission sont les données vidéo enregistrées ; et
le fait d'informer le serveur (101) du taux de transmission correspondant au réseau déterminé parmi les premier et deuxième réseaux de communication (14, 15) en tant que taux de transmission cible à obtenir par le processus de conversion à la baisse, si le processus de conversion à la baisse est nécessaire.

6. Procédé selon la revendication 5, **caractérisé en ce que** le premier réseau de communication (14) est un réseau de communication sans fil, et le deuxième réseau de communication (15) est un réseau de communication câblé.

7. Procédé selon la revendication 5, **caractérisé en ce que** l'étape de détermination comprend la sélection d'un réseau de communication actuellement utilisable parmi les premier et deuxième réseaux de communication (14, 15) en tant que réseau de communication à utiliser pour la communication avec le serveur (101).

8. Procédé selon la revendication 5, **caractérisé en ce que** l'étape de détermination comprend :
le fait de déterminer si les premier et deuxième réseaux de communication (14, 15) sont des réseaux de communication actuellement utilisables, et
la sélection d'un réseau parmi les premier et deuxième réseaux de communication (14, 15) en tant que réseau de communication à utiliser pour la communication avec le serveur (101) conformément à un taux de transmission de chacun des premier et deuxième réseaux de communication (14, 15), lorsque les premier et deuxième réseaux de communication (14, 15) sont tous les deux des réseaux de communication utilisables.
